# EUROPÄISCHE PATENTANMELDUNG

(11) **EP 1 296 428 A1**
(43) Veröffentlichungstag der Anmeldung: **26.03.2003**
(21) Anmeldenummer: 02016536.1
(22) Anmeldetag: 24.07.2002
(51) Int. Cl.: H02G 3/04

(54) **Verdrahtungskanal**

(30) Priorität: 25.09.2001 DE 20115768 U
(71) Anmelder: Tehalit GmbH & Co. KG, 67716 Heltersberg (DE)
(72) Erfinder: Eberle, Patrick, 66292 Riegelsberg (DE)
(74) Vertreter: Patentanwälte Möll und Bitterich

(57) **Zusammenfassung**

Gegenstand der Erfindung ist ein Verdrahtungskanal, dessen Kanalunterteil einen Boden (1), zwei Seitenwände, gebildet durch gegenseitig beabstandete Stege (2, 5), und gegebenenfalls Deckelhalteprofilen (6) an den freien Enden der Stege (2, 5) besitzt. In das freie Ende wenigstens eines Stegs (5) ist eine hinterschnittene Nut (7) eingeformt. Diese Nut (7) ist für eine Klemmverbindung mit einem abgebrochenen Steg (2, 5) dimensioniert, der so als Kabelrückhalteleiste dient.

## Beschreibung

Die Erfindung betrifft Verdrahtungskanäle gemäß dem Oberbegriff des Anspruchs 1.

Aus der US 3 890 459 ist ein Verdrahtungskanal bekannt, der aus einem Kanalunterteil mit U-förmigem Querschnitt besteht, gebildet durch einen Boden und zwei Seitenwände. Die Seitenwände werden gebildet durch regelmäßig beabstandete Stege, deren Enden so geformt sind, dass ein Deckel lösbar aufgerastet werden kann. Um bei einer senkrechten oder waagerechten Montage das Herausfallen von Kabeln aus dem geöffneten Kanalunterteil zu verhindern, sind Kabelrückhalteleisten vorgesehen. Diese besitzen einen Fuß, der so geformt ist, dass die Kabelrückhalteleiste zwischen zwei Stegen klemmend befestigt werden kann.

Ein weiterer Verdrahtungskanal mit bei Bedarf ansteckbarer Kabelrückhalteleiste ist bekannt aus der DE 22 01 211 C. Bei diesem Verdrahtungskanal wird das Kabelrückhalteelement zwischen zwei besonderen Klemmleisten innen an der Kanalseitenwand eingeklemmt.

Nachteilig an diesen beiden Konstruktionen ist, dass die Kabelrückhalteelemente durch besondere Einzelteile gebildet werden. Diese muss der Hersteller produzieren, lagern, listen und transportieren, der Installateur muss sie bestellen, lagern und montieren. Werden die falschen Rückhalteelemente bestellt oder wird die Bestellung vergessen, kann der Installateur die Baustelle nicht fertigstellen. Auch haben Kleinteile die Tendenz, spurlos zu verschwinden. Diese Situation ist unbefriedigend.

Es wurde auch schon versucht, völlig ohne Kabelrückhalteelemente auszukommen, indem die freien Enden der Stege vergleichbar einem Flaschenhals stark nach innen gezogen wurden. Man vergleiche die DE 27 14 885 C. Bei einer derartigen Konstruktion ist jedoch das nachträgliche Herausnehmen eines Kabels oder einer Leitung sehr erschwert. Deshalb konnten sich Verdrahtungskanäle mit diesem Querschnitt in der Praxis nicht durchsetzen.

Der vorliegenden Erfindung liegt die Aufgabe zugrunde, einen Verdrahtungskanal der eingangs genannten Art derart zu verändern und zu verbessern, dass der Installateur jederzeit Kabelrückhalteelemente zur Verfügung hat, wenn er sie benötigt, ohne dass diese gesondert produziert, gelagert, gelistet, bestellt und transportiert werden müssen.

Diese Aufgabe wird gelöst durch einen Verdrahtungskanal mit den Merkmalen des Anspruchs 1.

Die vorliegende Erfindung geht von der Idee aus, als Kabelrückhalteelement einen vom Kanalunterteil abgebrochenen Steg selbst zu verwenden und diesen mit Hilfe einer eingeformten Nut auf einen der anderen Stege aufzuklemmen. Dadurch werden keinerlei Sonderteile benötigt.

Vorteilhafterweise sind die Stege mit einer Solltrennstelle versehen. Diese erleichtert das Abbrechen und ergibt eine saubere Trennlinie.

Anhand der Zeichnung soll die Erfindung in Form eines Ausführungsbeispiels näher erläutert werden. Es zeigen jeweils ausschnittsweise
- Fig.1: ein Unterteil eines Verdrahtungskanals als Seitenansicht,
- Fig.2: eine Draufsicht auf das Kanalunterteil der Fig. 1,
- Fig.3: eine Frontansicht des Kanalunterteils der Fig. 1 und
- Fig.4: eine Draufsicht auf das Kanalunterteil der Fig. 1 bis 3 mit aufgeklemmtem Kabelrückhalteelement.

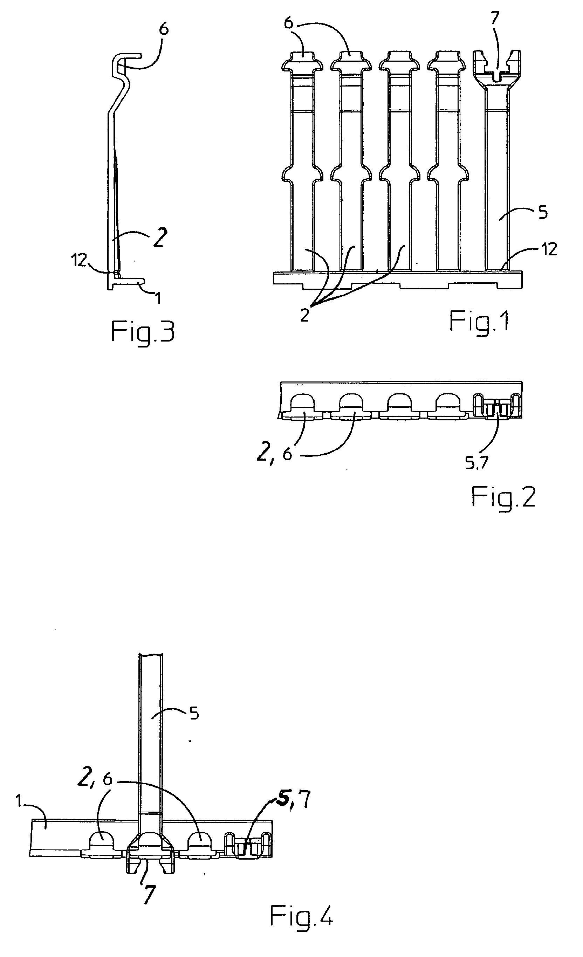

Fig. 1 als Seitenansicht, Fig. 2 als Draufsicht und Fig. 3 als Frontansicht zeigen ein Unterteil eines Verdrahtungskanals mit U-förmigem Querschnitt. Das Kanalunterteil besitzt einen Boden 1, zwei Seitenwände, gebildet durch gegenseitig beabstandete Stege 2, 5 und Deckelhalteprofile 6 an den freien Enden der Stege 2, 5, auf die ein Deckel (nicht dargestellt) lösbar aufgerastet werden kann.

In das freie Ende eines Stegs 5 ist eine hinterschnittene Nut 7 eingeformt. Deren Abmessungen sind so gewählt, dass der abgetrennte Steg 5 auf einen der anderen Stege 2 aufgeklemmt werden kann. Diese Situation ist in Fig. 4 dargestellt.

Alternativ besteht die Möglichkeit, einen der anderen Stege 2 abzubrechen und auf die Nut 7 des profilierten Stegs 5 aufzuklemmen.

Um die Stege 2, 5 sauber abbrechen zu können, besitzen sie eine eingeformte Solltrennstelle 12.

## Patentansprüche

1. Verdrahtungskanal, umfassend
- ein Kanalunterteil mit
- einem Boden (1),
- zwei Seitenwänden, gebildet durch gegenseitig beabstandete Stege (2, 5)
- und gegebenenfalls Deckelhalteprofilen (6) an den freien Enden der Stege (2, 5)
- und wenigstens ein Kabelrückhalteelement, da sich quer über die offene Seite des Kanalunterteils erstreckt,
**gekennzeichnet durch** die Merkmale:
- in das freie Ende wenigstens eines Stegs (5) ist eine hinterschnittene Nut (7) eingeformt,
- die Nut (7) ist für eine Klemmverbindung mit einem abgebrochenen Steg (2, 5) dimensioniert.

2. Verdrahtungskanal nach Anspruch 1, **gekennzeichnet durch** das Merkmal:
- die Stege (2, 5) sind mit einer Solltrennstelle (12) versehen.
